# EUROPEAN PATENT SPECIFICATION

(11) **EP 0 486 076 B1**
(45) Date of publication and mention of the grant of the patent: **21.01.1998**
(21) Application number: 91202693.7
(22) Date of filing: 16.10.1991
(51) Int. Cl.: A23B 4/10, A23L 1/312, A23L 1/317

(54) **Material for covering or coating food products and method for the production thereof**
Anstrich- oder Überzugmittel für Nahrung und Herstellungsverfahren
Matériau d'enrobage ou revêtement d'aliment et procédé de fabrication

(30) Priority: 18.10.1990 NL 9002273
(43) Date of publication of application: 20.05.1992
(73) Proprietor: Meester B.V., 8130 AA Wijhe (NL)
(72) Inventor: Vink, Pierre Hubert Marie, NL-7642 AB Wierden (NL)
(74) Representative: Smulders, Theodorus A.H.J., Ir.

(56) References cited:
- DE-A- 1 952 955
- DE-C- 221 913
- FR-A- 711 298
- NL-A- 7 206 554
- NL-A- 8 001 969
- US-A- 2 161 029

## Description

The invention relates to an edible material for covering or coating food products such as meat and meat products. It also relates to a method for preparing such a material.

Food products such as meat and meat products, particularly pâtés, types of sausage such as "Berliner" liver sausage, liver pâté and the like are generally provided with a relatively thin covering or coating layer of back fat. This coating layer increases shelf-life, prevents rapid dehydration of the meat and reduces the chance of discoloration thereof. Such a coating layer can be obtained by cutting the back fat of a pig into thin slabs and subsequently arranging the slabs around the meat product. However, present pig breeds have much meat but only very thin back fat layers. The result is that the quantity of natural back fat available for manufacturing back fat slabs has decreased. Due to the continually increasing demand for meat products provided with a covering or coating layer of back fat, a need has arisen for a covering or coating material which can serve as substitute material for natural back fat.

The Netherlands patent application 80.01969 and the German patent application 1 952 955 describe such substitute materials. It has been found from tests however that these materials do not satisfy practical requirements in respect of colour, sturdiness and breakage.

The invention therefore has for its object to provide a covering or coating material with which the above stated drawbacks can be obviated.

This is achieved according to the invention by providing an edible covering or coating material substantially characterized by the following composition: 10-50% animal or vegetable fat, 35-70% milk and/or water, 5-30% animal protein, 0-25% binders and/or thickeners and 0-5% salt. Such a material is malleable and elastic in structure, has a white colour and allows of simple arrangement on or around meat products or other foodstuffs of any desired form and size.

The invention further provides a method for preparing such a covering or coating material characterized in that a paste is prepared at increased temperature from 10-50% animal or vegetable fat, 35-70% milk and/or water, 5-30% animal protein, 0-25% binders and/or thickeners and 0-5% salt, whereafter the obtained paste undergoes shaping and is cooled. Such a method has the advantage that the obtained paste does not require re-pasteurizing, a treatment which was necessary with the known substitute products.

In preference the paste is prepared at a temperature above 60°C so that the animal or vegetable fat in the melted state can be emulsified with the other constituents.

The shaping of the paste preferably takes place by bringing the paste into layer form by means of pouring out and/or rolling. The product obtained after cooling then has a slab or film form and can be used as such for covering or coating food products, in contrast to the known back fat substitute materials which are usually obtained in block form and still have to be cut into slabs of the desired thickness prior to use.

The covering or coating material according to the invention contains 10-50% animal or vegetable fat. By animal fat is understood any normally solid fat obtained from animal tissue by removing cell walls and any connective tissue that may be present. Suitable examples are beef and pork fat. For particular applications vegetable fat or vegetable oil can be used, optionally in combination with animal fat. The covering or coating material further contains 5-30% animal protein, by which is understood both meat protein and collagen protein. Preferably used here is collagen protein in natural form (sinews or rind) or in powder form.

A following constituent of the covering or coating material according to the invention is formed by 0-25% binders and/or thickeners. Also included herein are emulsifiers and stabilizers. Suitable binders and/or thickeners are: starch such as potato starch, diverse types of modified starch, gelatine powder, milk proteins, soya protein, amino acids, connective tissue proteins, carragheens and thickeners such as E406, E410, E412 and E472C. The covering or coating material further contains 0-5% salt which is preferably nitrite-containing.

In a preferred embodiment the covering or coating material according to the invention contains: 13.9% animal fat, 8.3% animal protein, 36% water, 19.4% pasteurized milk, 11% potato starch, 9.7% gelatine powder and 1.7% nitrite-containing salt. This material can be prepared in the above stated manner, wherein the said paste is preferably obtained by first preparing at increased temperature an emulsion from the animal fat, the milk and the water in the presence of the animal protein, and subsequently adding the binders and/or thickeners and the salt. The salt may optionally be added during preparation of the emulsion. The emulsion is preferably prepared by homogeneously mixing the animal fat in melted state with the animal protein and then adding milk and water. The obtained emulsion must therein have an increased temperature, preferably above 60°C, so that complete emulsification of the fat is possible. Such a temperature can be obtained through use of warm milk and/or warm water, but also by heating the mixture after adding the milk and water. After addition of the binders and thickeners and the salt a warm paste is obtained which can then be cooled into any desired shape and thickness. Owing to the increased temperature at which the paste is prepared, no re-pasteurization is required.

In another preferred embodiment the covering or coating material according to the invention contains: 13.9% animal fat, 8.3% animal protein, 36% water, 18.4% milk, 11% potato starch, 9.7% carragheen and 2.7% nitrite-containing salt.

This embodiment can likewise be prepared in the above stated manner by preparing a paste from the constituents, subjecting the paste to shaping and cooling it. The said paste is preferably obtained in this case by preparing at increased temperature an emulsion from the animal fat, the animal protein and a part of the milk and the water and in addition preparing an emulsion at increased temperature from the binders and thickeners (or a part thereof) and another part of the milk and the water and subsequently combining both emulsions and admixing the remaining constituents. Preparation will here also take place at increased temperature, preferably above 60°C, which can be obtained in different ways. In preference the animal fat is melted and mixed with the animal protein, whereafter boiling water is added in order to obtain a first emulsion. In addition a second emulsion is then prepared by adding carragheen to heated pasteurized milk. Both emulsions are then combined whereafter the remaining binders and/or thickeners and the salt are added. The obtained hot paste can in this case also be cooled into any desired shape and thickness.

The shaping and cooling of the paste can generally be performed in any suitable manner. Preferably however the paste is poured out in layer form on a conveyor belt and cooled immediately thereafter on the same conveyor belt. If desired, the (partially) cooled paste can subsequently be rolled to a thickness of approximately 1½ to 2½ mm. Cooling of the paste can take place for instance by means of flowing water, carbon dioxide or nitrogen. Prior to cooling a plastic foil is preferably arranged on the paste in order to ensure the hygiene and handling of the product. After cooling the obtained slab or film-like covering or coating material can be removed without difficulty from the conveyor belt.

The covering or coating material according to the invention is malleable and elastic, has a white colour and can be arranged in simple manner on or around meat products and other foodstuffs of any desired form and size. The material has good adherence to meat products so that when these meat products are cut the covering or coating layer does not come loose.

## Claims

1. Edible material for covering or coating food products such as meat and meat products, **characterized in that** the material has the following composition:
10-50% animal or vegetable fat
35-70% milk and/or water
5-30% animal protein
0-25% starch and other binders and/or thickeners
0-5% salt.

2. Covering or coating material as claimed in claim 1, **characterized by** the following composition:
13.9% animal fat
8.3% animal protein
36% water
19.4% milk
11% potato starch
9.7% gelatine powder
1.7% nitrite-containing salt.

3. Covering or coating material as claimed in claim 1, **characterized by** the following composition:
13.9% animal fat
8.3% animal protein
36% water
18.4% milk
11% potato starch
9.7% carragheen
2.7% nitrite-containing salt.

4. Covering or coating material as claimed in claims 1-3, **characterized in that** it is in slab or film form.

5. Method for preparing a covering or coating material as intended in claims 1-4, **characterized in that** a paste is prepared at increased temperature from 10-50% animal or vegetable fat, 35-70% milk and/or water, 5-30% animal protein, 0-25% starch and other binders and/or thickeners and 0-5% salt, whereafter the resulting paste is shaped and cooled.

6. Method as claimed in claim 5, **characterized in that** the paste is prepared at a temperature above 60°C.

7. Method as claimed in claim 5 or 6, **characterized in that** the said paste is obtained by first preparing at increased temperature an emulsion from the animal or vegetable fat and the milk and/or the water in the presence of the animal protein, and subsequently adding the binders and/or thickeners and the salt.

8. Method as claimed in claim 5 or 6, **characterized in that** the said paste is obtained by preparing at increased temperature an emulsion from the animal or vegetable fat, the animal protein and a part of the milk and/or the water and in addition preparing an emulsion at increased temperature from the binders and/or thickeners (or a part thereof) and another part of the milk and/or the water and subsequently combining both emulsions and admixing the remaining constituents.

9. Method as claimed in claims 5-8, **characterized in that** shaping is performed by bringing the paste into layer form by means of pouring out and/or rolling.

10. Method as claimed in claims 5-9, **characterized in that** cooling takes place on a conveyor belt.

11. Food products such as meat or meat products covered or coated with a material as claimed in claims 1-4.

## Patentansprüche

1. Eßbares Material zum Abdecken oder Beschichten von Nahrungsprodukten, wie Fleisch und Fleischprodukten, dadurch gekennzeichnet, daß das Material die folgende Zusammensetzung hat:
10-50% tierisches oder Pflanzenfett;
35-70% Milch und/oder Wasser;
5-30% tierisches Protein;
0-25% Stärke und andere Bindemittel und/oder Verdikkungsmittel;
0-5% Salz.

2. Abdeckungs- oder Beschichtungsmaterial gemäß Anspruch 1, gekennzeichnet durch die folgende Zusammensetzung:
13,9% tierisches Fett;
8,3% tierisches Protein;
36% Wasser;
19,4% Milch;
11% Kartoffelstärke;
9,7% Gelatinepulver;
1,7% nitrithaltiges Salz.

3. Abdeckungs- oder Beschichtungsmaterial gemäß Anspruch 1, gekennzeichnet durch die folgende Zusammensetzung:
13,9% tierisches Fett;
8,3% tierisches Protein;
36% Wasser;
18,4% Milch;
11% Kartoffelstärke;
9,7% Carrageen;
2,7% nitrithaltiges Salz.

4. Abdeckungs- oder Beschichtungsmaterial gemäß Anspruch 1 bis 3, dadurch gekennzeichnet, daß es in Block- oder Schichtform vorliegt.

5. Verfahren zur Herstellung eines Abdeckungs- oder Beschichtungsmaterials gemäß Anspruch 1 bis 4, dadurch gekennzeichnet, daß bei erhöhter Temperatur eine Paste aus 10-50% tierischem oder Pflanzenfett, 35-70% Milch und/oder Wasser, 5-30% tierischem Protein, 0-25% Stärke und anderen Bindemitteln und/oder Verdickungsmitteln und 0-5% Salz hergestellt wird, woraufhin die resultierende Paste geformt und abgekühlt wird.

6. Verfahren gemäß Anspruch 5, dadurch gekennzeichnet, daß die Paste bei einer Temperatur über 60°C hergestellt wird.

7. Verfahren gemäß Anspruch 5 oder 6, dadurch gekennzeichnet, daß man die Paste erhält, indem man zuerst bei erhöhter Temperatur eine Emulsion aus dem tierischen oder Pflanzenfett und der Milch und/oder dem Wasser in Gegenwart des tierischen Proteins herstellt und anschließend die Bindemittel und/oder Verdickungsmittel und das Salz hinzufügt.

8. Verfahren gemäß Anspruch 5 oder 6, dadurch gekennzeichnet, daß man die Paste erhält, indem man bei erhöhter Temperatur eine Emulsion aus dem tierischen oder Pflanzenfett, dem tierischen Protein und einem Teil der Milch und/oder des Wassers herstellt und außerdem bei erhöhter Temperatur eine Emulsion aus den Bindemitteln und/oder Verdickungsmitteln (oder einem Teil davon) und einem weiteren Teil der Milch und/oder des Wassers herstellt und anschließend die beiden Emulsionen miteinander kombiniert und die übrigen Bestandteile dazumischt.

9. Verfahren gemäß Anspruch 5 bis 8, dadurch gekennzeichnet, daß das Formen durchgeführt wird, indem man die Paste durch Ausgießen und/oder Walzen in Schichtform bringt.

10. Verfahren gemäß Anspruch 5 bis 9, dadurch gekennzeichnet, daß das Abkühlen auf einem Förderband erfolgt.

11. Nahrungsprodukte, wie Fleisch oder Fleischprodukte, die mit einem Material gemäß Anspruch 1 bis 4 abgedeckt oder beschichtet sind.

## Revendications

1. Matière comestible destinée à enrober ou revêtir des produits alimentaires comme de la viande et des produits à base de viande, caractérisée en ce que cette matière présente la composition suivante :
- 10 à 50 % de graisse animale ou végétale
- 35 à 70 % de lait et/ou d'eau
- 5 à 30 % de protéines animales
- 0 à 25 % d'amidon et autres liants et/ou épaississants
- 0 à 5 % de sel.

2. Matière d'enrobage ou de revêtement conforme à la revendication 1, caractérisée par la composition suivante :
- 13,9 % de graisse animale
- 8,3 % de protéines animales
- 36 % d'eau
- 19,4 % de lait
- 11 % d'amidon de pomme de terre
- 9,7 % de gélatine en poudre
- 1,7% de sel contenant un nitrite.

3. Matière d'enrobage ou de revêtement conforme à la revendication 1, caractérisée par la composition suivante :
- 13,9 % de graisse animale
- 8,3 % de protéines animales
- 36 % d'eau
- 18,4 % de lait
- 11 % d'amidon de pomme de terre
- 9,7 % de carraghénine
- 2,7% de sel contenant un nitrite.

4. Matière d'enrobage ou de revêtement conforme à l'une des revendications 1 à 3, caractérisée en ce qu'elle se présente sous forme de plaque ou de film.

5. Procédé de préparation d'une matière d'enrobage ou de revêtement conforme à l'une des revendications 1 à 4, caractérisé en ce qu'on prépare une pâte, à température élevée, à partir de 10 à 50 % de graisse animale ou végétale, 35 à 70 % de lait et/ou d'eau, 5 à 30 % de protéines animales, 0 à 25 % d'amidon et autres liants et/ou épaississants et 0 à 5 % de sel, après quoi on façonne la pâte résultante et on la refroidit.

6. Procédé conforme à la revendication 5, caractérisé en ce qu'on prépare la pâte à une température supérieure à 60 °C.

7. Procédé conforme à la revendication 5 ou 6, caractérisé en ce qu'on obtient ladite pâte en préparant d'abord une émulsion, à température élevée, à partir de la graisse animale ou végétale et du lait et/ou de l'eau, en présence des protéines animales, et en y ajoutant ensuite les liants et/ou épaississants et le sel.

8. Procédé conforme à la revendication 5 ou 6, caractérisé en ce qu'on obtient ladite pâte en préparant une émulsion, à température élevée, à partir de la graisse animale ou végétale, des protéines animales et d'une partie du lait et/ou de l'eau, en préparant en plus une autre émulsion, à température élevée, à partir des liants et/ou épaississants, ou d'une partie de ceux-ci, et d'une autre partie du lait et/ou de l'eau, en réunissant ensuite ces deux émulsions et en y ajoutant le reste des constituants.

9. Procédé conforme à l'une des revendications 5 à 8, caractérisé en ce qu'on façonne la pâte en la mettant sous la forme d'une couche, par coulée et/ou par étalement au rouleau.

10. Procédé conforme à l'une des revendications 5 à 9, caractérisé en ce que le refroidissement se déroule sur une bande de transporteur.

11. Produits alimentaires comme de la viande ou des produits à base de viande, enrobés ou revêtus d'une matière conforme à l'une des revendications 1 à 4.
